# EUROPEAN PATENT APPLICATION

(11) **EP 1 056 255 A2**
(43) Date of publication of application: **29.11.2000**
(21) Application number: 00304054.0
(22) Date of filing: 15.05.2000
(51) Int. Cl.: H04L 29/06

(54) **System and method for location-dependent message access**

(30) Priority: 27.05.1999 US 321189
(71) Applicant: LUCENT TECHNOLOGIES INC., Murray Hill, New Jersey 07974-0636 (US)
(72) Inventor: Williams, Marvin L., Hickory Creek, Texas 75065 (US)
(74) Representative: Watts, Christopher Malcolm Kelway, Dr.

(57) **Abstract**

A system for, and method of, controlling access to a received message. In one embodiment, the system includes: (1) a position comparison circuit that makes a comparison between a position of the system and positional information coupled to the message and (2) a message access controller, coupled to the position comparison circuit, that controls access to the message based on an outcome of the comparison.

## Description

### Technical Field Of The Invention

The present invention is directed, in general, to security systems for electronic communication and, more specifically, to a system and method for location-dependent message access and a telecommunications infrastructure incorporating the system or the method.

### Background Of The Invention

With the advent of e-mail and the electronic distribution of messages, enterprises are rapidly coming to rely heavily on the distribution of information through the use of these mechanisms. E-mail speeds this distribution of information on a world-wide basis and allows rapid delivery even in widely differing time zones and remote locations. Of course, the facility with which information may be discimnated encourages e-mail to be used for all types of information including that which may be very sensitive. This would include sales and marketing projections, business scenarios and strategic plans, and Human Resources salary information or planned employee reductions, to name a few.

As the use of e-mail has grown, security measures to prevent unauthorized or unintended viewing of a message's content have also grown. These include the use of password techniques that are designed to allow only an intended recipient to view the message. However, passwords are often common knowledge in a work environment and therefore do not serve to prevent unauthorized viewing of a message. Other, more sophisticated encryption and decryption techniques may also be employed that make unauthorized message viewing more difficult. However, if these techniques are to increase effectiveness in message security, their application requires added levels of complexity that normally put an additional requirement and therefore an additional burden on the intended user. Some may be so complex as to discourage viewing by the user.

Another problem area is the rapid growth in the capability of those persons who are adept at defeating encryption schemes. These "hackers" welcome the challenge of breaking into secure areas and systems. Since hackers consider breaking into these sensitive information areas an intellectual game, they are highly motivated to succeed. Unfortunately for the enterprise, hackers may also use or redistribute the illegitimately obtained information in a manner that is illegal or otherwise destructive,

Accordingly, what is needed in the art is a way to enhance encryption schemes that perform effectively without inordinately increasing user complexity.

### Summary Of The Invention

To address the above-discussed deficiencies of the prior art, the present invention provides a system for, and method of, controlling access to a received message. In one embodiment, the system includes: (1) a position comparison circuit that makes a comparison between a position of the system and positional information coupled to the message and (2) a message access controller, coupled to the position comparison circuit, that controls access to the message based on an outcome of the comparison.

The present invention therefore introduces the broad concept of location-limiting access to a message. Of course, such location-limiting may be employed in conjunction with other access limitations, such as passwords (identity-limiting), time-limiting and message lifetime-limiting, to enhance security further.

In one embodiment of the present invention, the message access controller controls the access to the message by decrypting the message only when the outcome is favorable. Alternatively, the message access controller can decrypt the message, but only display it to the recipient if the outcome is favorable. If the outcome is unfavorable, the message access controller can dispose of the message or store it until such time as the outcome becomes favorable. Those skilled in the pertinent art will doubtless perceive other ways in which the message access controller can control access to the message based on location.

In one embodiment of the present invention, the message is encrypted based on at least some of the positional information. Thus, some or all of the positional information can serve as an encryption key, or as one of multiples keys. Of course, this is not necessary to the broad scope of the present invention.

In one embodiment of the present invention, the positional information comprises an absolute location and a range therefrom. The absolute location may be expressed in one or more dimensions and may be Cartesian, polar or any other representation. Alternatively, the positional information may simply circumscribe a given area within which the recipient may read the message. The sender of the message can set the positional information, or it can be preset and immutable.

In one embodiment of the present invention, the system is located proximate a recipient of the message. Alternatively, the recipient may be distant from the system.

In one embodiment of the present invention, the position comparison circuit derives the position from a global positioning system (GPS). Those skilled in the pertinent art are familiar with GPS and its ability to pinpoint the location of an object on the face of the Earth. Of course, other positional systems may come into being in the future. The present invention is employable with any positioning system that allows the system of the present invention to know its position.

In one embodiment of the present invention, the system receives the message via a wireless telecommunications network. Alternatively, the telecommunications network can be a wireline telecommunications network or a computer network, such as the Internet.

The foregoing has outlined, rather broadly, preferred and alternative features of the present invention so that those skilled in the art may better understand the detailed description of the invention that follows. Additional features of the invention will be described hereinafter that form the subject of the claims of the invention. Those skilled in the art should appreciate that they can readily use the disclosed conception and specific embodiment as a basis for designing or modifying other structures for carrying out the same purposes of the present invention. Those skilled in the art should also realize that such equivalent constructions do not depart from the spirit and scope of the invention in its broadest form.

### Brief Description Of The Drawings

For a more complete understanding of the present invention, reference is now made to the following descriptions taken in conjunction with the accompanying drawings, in which:
FIGURE 1 illustrates a systems diagram showing an embodiment of a telecommunications infrastructure including a plurality of message transceivers constructed according to the present invention; and
FIGURE 2 illustrates a flow diagram showing a telecommunications infrastructure 200 constructed according to the principles of the present invention.

### Detailed Description

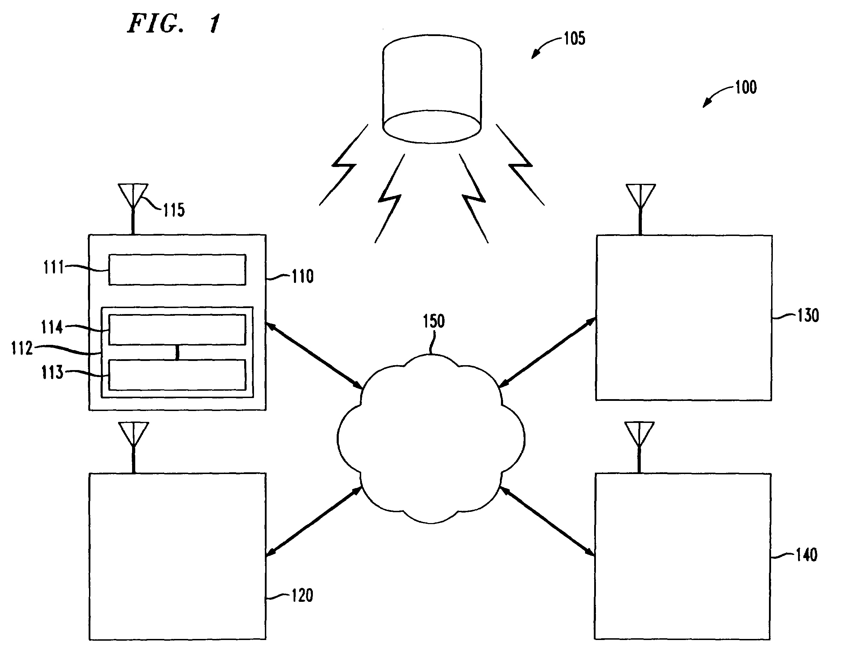

Referring initially to FIGURE 1, illustrated is a systems diagram showing an embodiment of a telecommunications infrastructure 100 including a plurality of message transceivers constructed according to the principles of the present invention. The telecommunications infrastructure 100 includes global positioning system (GPS) satellites 105, a plurality of first, second, third and fourth message transceivers 110, 120, 130, 140 and a telecommunications network 150. The first message transceiver 110, which is characteristic of the plurality of message transceivers 110, 120, 130, 140, further includes a transmitter 111 and a receiver 112 having a position comparison circuit 113 and a message access controller 114, and an antenna 115 for receiving GPS information (GPSI).

The plurality of message transceivers 110, 120, 130, 140 are coupled to the telecommunications network 150. The position comparison circuit 113 makes a comparison between its present position and positional information coupled to the message from each of the plurality of other message transceivers 120, 130, 140 and delivers the result to the message access controller 114. The message access controller 114, coupled to the position comparison circuit 113, then controls access to the message based on an outcome of the comparison. Thus, the first message transceiver 110 may send messages to or receive messages from the second, third or fourth message transceivers 120, 130, 140 and encrypt for sending or decrypt for receiving them based on its location.

The present invention provides a system for, as well as a method of, controlling access to a received message, thereby introducing the broad concept of location-limiting access to a message. Of course, such location-limiting may be employed in conjunction with other access limitations, such as passwords (identity-limiting), time-limiting and message lifetime-limiting, to enhance security further.

In the present embodiment, the message access controller 114 controls the access to the message by decrypting the message only when the outcome is favorable. Alternatively, the message access controller 114 can decrypt the message, but only display it to the recipient if the outcome is favorable. If the outcome is unfavorable, the message access controller 114 can dispose of the message or store it until such time as the outcome becomes favorable. Those skilled in the pertinent art will doubtless perceive other ways in which the message access controller 114 can control access to the message based on location.

Additionally, the message in the present embodiment is encrypted based on at least some of the positional information. Thus, some or all of the positional information can serve as an encryption key, or as one of multiple keys. Of course, this is not necessary to the broad scope of the present invention. The positional information comprises an absolute location and a range therefrom. The absolute location may also be expressed in one or more dimensions and may be Cartesian, polar or any other representation.

Alternatively, the positional information may simply circumscribe a given volume or area within which the recipient may read the message. The sender of the message can set the positional information, or it can be preset and immutable. For example, the positional information could be expressed as 32.12.07N 28.12.02W, 300 feet radius, indicating that the message is only viewable within a radius of 300 feet of that location. This may be interpreted as a 300 foot spherical radius or understood to be a radius confined to a plane at some elevation to further limit the target receiving area.

In the present embodiment, the system is located proximate a recipient of the message. However, the recipient may also be located at some distance from the system and be linked to the location via an appropriate communications linkage. The position comparison circuit 113 derives the position of the message transceiver 110 from a GPS. Those skilled in the pertinent art are familiar with GPS and its ability to pinpoint the location of an object on the face of the Earth. Of course, other positional systems may come into being in the future. The present invention is employable with any positioning system that allows the system of the present invention to know its position.

The telecommunications system 100, in this embodiment, sends and receives messages via a wireless telecommunications network 150. Alternatively, the telecommunications network 150 can be a wireline telecommunications network or a computer network, such as the Internet. Additionally, the plurality of message transceivers 110, 120, 130, 140 may be fixed, mobile or a combination of fixed and mobile.

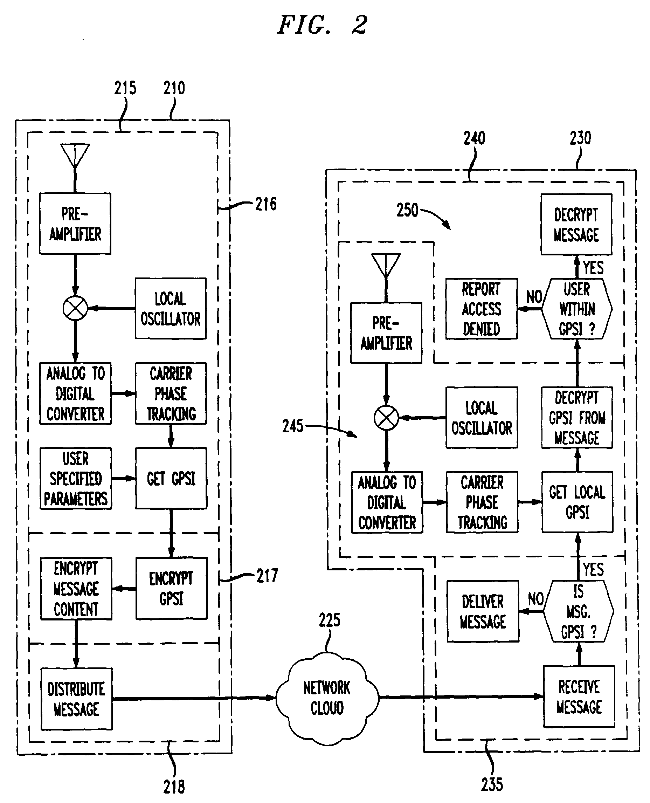

Turning now to FIGURE 2, illustrated is a flow diagram showing a telecommunications infrastructure 200 constructed according to the principles of the present invention. The telecommunications infrastructure 200 includes a first transceiver 210 having a transmitter 215, a telecommunications network 225 and a second transceiver 230 having a receiver 240. The transmitter 215 includes a GPSI constructor 216, a message encrypter 217 and a message distributor 218. The receiver 240 includes a message receiver 235, a position comparison circuit 245 and a message access controller 250.

The GPSI constructor 216 obtains a GPSI through an antenna and preamplifier signal from a GPS being mixed with a local oscillator, converted to a digital representation through the analog to digital converter and then carrier phase tracked and combined with user specific parameters as shown. The message encrypter 217 then encrypts the GPSI obtained from the GPSI constructor 216 along with a message content to be transmitted. Finally, the message distributor 218 distributes the encrypted message via the telecommunications network 225 to the receiver 240.

The message receiver 235 receives the encrypted message and determines if the message contains a GPSI. If no GPSI is detected, the message is delivered as received. If a GPSI is detected, the message is presented to the position comparison circuit 245. The position comparison circuit 245 then obtains a local GPSI from the antenna, preamplifier, local oscillator mixer, analog to digital converter and carrier phase tracking circuits. This local GPSI is then compared to the encrypted GPSI and decrypted from the message for presentation to the message access controller 250.

The message access controller 250 then determines if the current user is within the targeted GPSI. If the current user is not within the targeted GPSI, then access is denied to the message. If, however, the current user is within the targeted GPSI, the message is decrypted and displayed.

## Claims

1. A method of controlling access to a message received by a system, comprising:
making a comparison between a position of said system and positional information coupled to said message; and
controlling access to said message based on an outcome of said comparison.

2. The method as recited in claim 1 wherein said controlling comprises decrypting said message only when said outcome is favorable.

3. The method as recited in claim 1 or claim 2 wherein said message is encrypted based on at least some of said positional information.

4. The method as recited in any of the preceding claims wherein said positional information comprises an absolute location and a range therefrom.

5. The method as recited in any of the preceding claims wherein said method is carried out proximate a recipient of said message.

6. The method as recited in any of the preceding claims wherein said making comprises deriving said position from a global positioning system.

7. The method as recited in any of the preceding claims further comprising receiving said message via a wireless telecommunications network.

8. A system for controlling access to a received message, comprising means arranged to carry out a method as claimed in any of the preceding claims.

9. A telecommunications infrastructure, comprising:
a telecommunications network; and
a plurality of message transceivers couplable to said telecommunications network, each of said plurality of message transceivers including:
a transmitter that transmits messages,
a receiver, associated with said transmitter, that receives a message containing positional information, and
means for carrying out a method as claimed in any of claims 1 to 7 to control access to said message.

10. A transmission, comprising:
an encrypted message; and
positional information, coupled to said encrypted message, regarding a position of a receiver of said transmission and employable by said receiver to control access to said encrypted message.

11. The transmission as recited in claim 10 wherein said message is encrypted based on at least some of said positional information.

12. The transmission as recited in claim 10 or claim 11 wherein said positional information comprises an absolute location and a range therefrom.

13. The transmission as recited in any of claims 10 to 12 wherein said positional information is derived from a global positioning system.

14. The transmission as recited in any of claims 10 to 13 wherein said transmission travels over a wireless telecommunications network.
